# FASCICULE DE BREVET EUROPEEN

(11) **EP 3 547 001 B1**
(45) Date de publication et mention de la délivrance du brevet: **13.10.2021**
(21) Numéro de dépôt: 19162606.8
(22) Date de dépôt: 13.03.2019
(51) Int. Cl.: G02B 7/02, G02B 7/00, G03B 17/55

(54) **DISPOSITIF OPTIQUE POUR VEHICULE COMPRENANT UN ELEMENT DE CHAUFFAGE**
OPTISCHE VORRICHTUNG FÜR FAHRZEUGE MIT HEIZELEMENT
OPTICAL DEVICE FOR VEHICLES COMPRISING A HEATING ELEMENT

(30) Priorité: 29.03.2018 FR 1852746
(43) Date de publication de la demande: 02.10.2019
(73) Titulaire: Aptiv Technologies Limited, St. Michael (BB)
(72) Inventeur: RAFALOWSKI, Arkadiusz, 32-064 BRZEZINKA (PL); ZUROWSKI, Miroslaw J., 30-348 Krakow (PL); POREDA, Witold, 12-221 RUCIANE NIDA (PL)
(74) Mandataire: Vigand, Philippe

(56) Documents cités:
- WO-A1-2016/195403
- WO-A1-2018/052043
- FR-A1- 2 917 939
- JP-A- H04 247 421
- US-A1- 2014 061 438

## Description

### DOMAINE TECHNIQUE

La présente invention concerne un dispositif optique pour véhicule et plus particulièrement un dispositif optique comprenant un élément de chauffage

### ARRIERE-PLAN TECHNOLOGIQUE DE L'INVENTION

Les organes électroniques pour véhicule automobile agencés à l'extérieur des véhicules subissent les contraintes environnementales telles sue le froid et la glace. Afin de ne pas subir les effets persistant de ces contraintes, ces organes électroniques sont généralement équipés de dispositifs électriques permettant de se débarrasser des effets de ces contraintes. On peut par exemple trouver des organes électroniques munis de dispositifs électriques tels que par exemple des éléments de chauffage pour combattre le gel.

Le pilotage de ces dispositifs électriques est généralement réalisé par le biais de faisceaux électriques et de connecteurs reliant une carte de contrôle électronique et les dispositifs électriques.

Les solutions actuelles de raccordement électrique de ces dispositifs électriques sont encombrantes, couteuses et lourdes.

Il est donc important de proposer une solution nouvelle résolvant ces problèmes.

### RESUME DE L'INVENTION

Un dispositif optique selon l'invention est défini par la revendication 1.

L'élément de chauffage du dispositif est un ressort agencé en contrainte élastique entre le support de lentilles et la carte à circuit imprimé. Le dispositif optique peut comprendre un second élément de chauffage agencé de manière similaire au premier élément de chauffage, le second élément de chauffage étant configuré pour être connecté à une masse électrique de la carte à circuit imprimé. Le dispositif optique peut comprendre un élément additionnel de connexion électrique entre le premier élément de chauffage et le second élément de chauffage, le dit élément additionnel de connexion électrique pouvant être plaqué contre le support de lentilles.

L'élément de chauffage peut être un ressort hélicoïdal multi-spire agencé en compression entre le support de lentilles et la carte à circuit imprimé.

Le support de lentilles peut comporter une base cylindrique ouverte à son extrémité basse et s'étendant selon l'axe optique, la carte à circuit imprimé pouvant être agencée contre l'extrémité basse de la base formant ainsi une cavité interne au support de lentilles, l'élément de chauffage étant un ressort à lame agencé en appui élastique contre la face interne de la paroi cylindrique de la base.

La carte à circuit imprimé peut comprendre une ouverture à proximité du premier élément de chauffage, la dite ouverture étant prévue pour y insérer une tige de maintien du premier élément de chauffage dans une position hors contrainte contre le support de lentilles lors de l'alignement, selon l'axe optique du dispositif, du circuit électronique de capture d'images et de la lentille optique.

Selon l'invention, une méthode d'assemblage d'un dispositif optique comprend les étapes de :
fourniture d'un support de lentilles métallique comprenant au moins une lentille optique;
fourniture d'une carte à circuit imprimé comprenant un élément de chauffage électriquement conducteur et un circuit électronique de capture d'images;
agencement du support de lentilles sur la carte à circuit imprimé électronique de capture d'images de sorte à aligner, selon l'axe optique du dispositif, le circuit électronique de capture d'images et la lentille optique; et de sorte à agencer l'élément de chauffage entre le support de lentilles et la carte à circuit imprimé, et en appui contre le support de lentilles.

L'étape d'agencement du support de lentilles sur la carte à circuit imprimé peut comprendre les étapes de:
maintenir l'élément de chauffage dans une position hors contrainte élastique contre le support de lentilles lors de l'alignement, selon l'axe optique du dispositif, du circuit électronique de capture d'images et de la lentille optique, et
agencer l'élément de chauffage en appui contre le support de lentilles après l'alignement, selon l'axe optique du dispositif, du circuit électronique de capture d'images et de la lentille optique.

Selon l'invention, une méthode de chauffage de lentilles du dispositif optique décrit ci avant comprend les étapes de :
circulation d'un courant électrique dans l'élément de chauffage de la carte à circuit imprimé de sorte à générer de la chaleur de l'élément de chauffage en appui contre le support de lentilles métallique;
transmission de la chaleur de l'élément de chauffage au support de lentilles;
conduction de la chaleur à travers le support de lentilles métallique jusqu'à chaque lentille optique du support de lentilles.

### BREVE DESCRIPTION DES DESSINS

D'autres caractéristiques, buts et avantages de l'invention apparaîtront à la lecture de la description détaillée qui va suivre, et en regard des dessins annexés, donnés à titre d'exemple non limitatif et sur lesquels:
- La figure 1 est une vue schématique en perspective éclatée du dispositif optique selon un premier mode de réalisation de l'invention.
- La figure 2 est une vue schématique en perspective en coupe transversale du dispositif optique de la figure 1 assemblé.
- La figure 3 est une vue schématique en perspective en coupe transversale du support de lentilles monté sur la première carte à circuit imprimé selon le premier mode de réalisation.
- La figure 4 est une vue schématique en perspective en coupe transversale du support de lentilles agencé sur la première carte à circuit imprimé selon un second mode de réalisation.
- La figure 5 est une vue en perspective de la première carte à circuit imprimé du second mode de réalisation comprenant les ressorts hélicoïdaux et une coupelle formant le circuit électrique de chauffage du support de lentilles.
- La figure 6 est une vue schématique en perspective en coupe transversale du support de lentilles agencé sur la première carte à circuit imprimé selon un troisième mode de réalisation, pendant l'étape d'alignement selon l'axe optique des lentilles avec le circuit électronique de capture d'images.
- La figure 7 est une vue schématique en perspective en coupe transversale du support de lentilles agencé sur la première carte à circuit imprimé selon le troisième mode de réalisation, après l'étape d'alignement selon l'axe optique des lentilles avec le circuit électronique de capture d'images.
- La figure 8 est une vue schématique en perspective éclatée du dispositif optique selon un quatrième mode de réalisation de l'invention.
- La figure 9 est une vue schématique en perspective en coupe transversale du dispositif optique de la figure 8 assemblé.
- La figure 10 est une vue schématique en perspective en coupe transversale du support de lentilles monté sur la première carte à circuit imprimé selon le quatrième mode de réalisation.
- La figure 11 est une vue schématique en perspective en coupe transversale du support de lentilles agencé sur la première carte à circuit imprimé selon un cinquième mode de réalisation.
- La figure 12 est une vue en perspective de la première carte à circuit imprimé du cinquième mode de réalisation comprenant les ressorts à lame et une autre coupelle formant le circuit électrique de chauffage du support de lentilles.
- La figure 13 est une vue schématique en perspective en coupe transversale du support de lentilles agencé sur la première carte à circuit imprimé selon un sixième mode de réalisation, pendant l'étape d'alignement selon l'axe optique des lentilles avec le circuit électronique de capture d'images.
- La figure 14 est une vue schématique en perspective en coupe transversale du support de lentilles agencé sur la première carte à circuit imprimé selon le sixième mode de réalisation, après l'étape d'alignement selon l'axe optique des lentilles avec le circuit électronique de capture d'images.

### DESCRIPTION DES MODES DE REALISATION PREFERES

Afin de faciliter la description, et de façon non limitative, un repère orthogonal comprenant un axe longitudinal L, un axe transversal T et un axe vertical V est défini. Des orientations « bas », « haut », « dessus », « dessous », « inférieure » et « supérieure » sont définies selon la direction verticale. Des orientations « gauche », « droite » et « latérale » sont définies selon la direction transversale. Des orientations « avant » et « arrière » sont également définies selon la direction longitudinale.

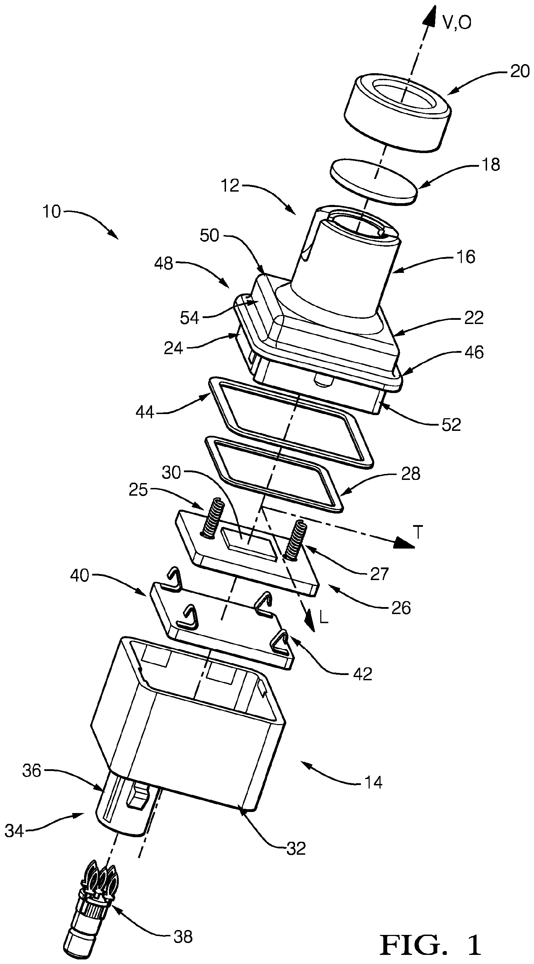

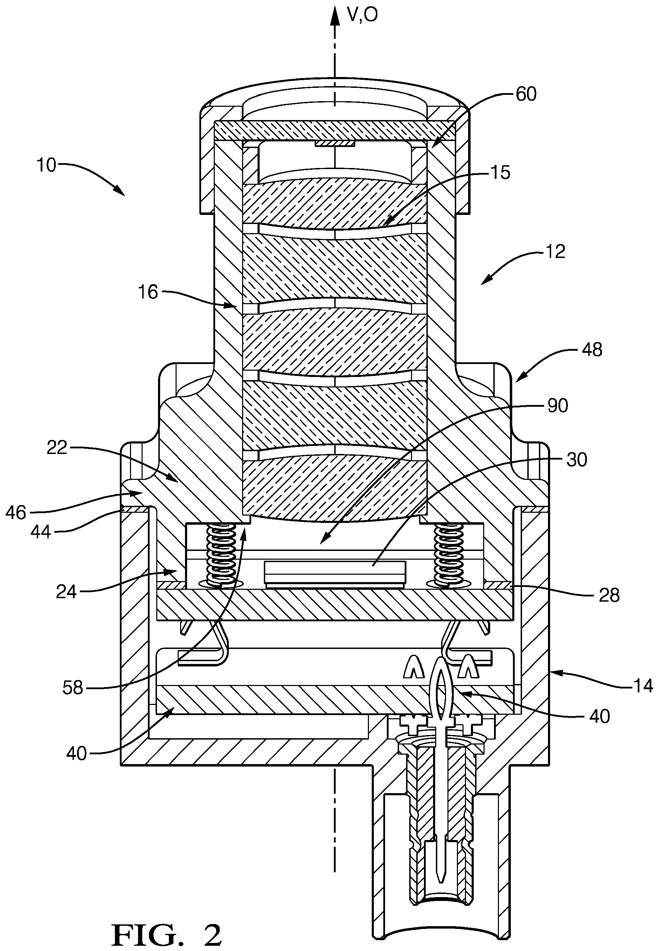

Selon la figure 1 et la figure 2, un dispositif optique 10, plus particulièrement une caméra pour véhicule est représentée. Ce type de caméra est prévu pour être monté à l'extérieur du véhicule et donc subir les conditions extérieures au véhicule tel que le climat.

Selon la figure 1, le dispositif optique 10 comprend un support de lentilles 12 et un boîtier inférieur 14.

Le support de lentilles 12 est équipé de lentilles optiques 15 et est surmonté d'une glace de protection 18 maintenue sur le support de lentilles 12 par un capot de maintien 20. Le support de lentilles 12 comporte une portion tubulaire 16 et également une base 22 cylindrique, la dite base 22 cylindrique étant ouverte à son extrémité basse 24 et comprenant une paroi d'extrémité supérieure 50.

Le dispositif optique 10 comprend une première carte à circuit imprimé 26 prévue pour être fixée sur l'extrémité basse 24, par l'intermédiaire d'un premier joint 28 adhésif, de sorte à fermer hermétiquement le support de lentilles 12. La première carte à circuit imprimé 26 comprend un circuit électronique de capture d'images 30 aligné avec les lentilles 15 selon l'axe optique O du dispositif optique 10, ainsi qu'un premier ressort hélicoïdal 25 multi spire et un second ressort hélicoïdal 27 multi spire agencés sur la face supérieure de la première carte à circuit imprimé 26 et s'étendant verticalement.

Le boîtier inférieur 14 est de forme cylindrique creux à base rectangulaire. Le boîtier inférieur 14 comporte un fond de boîtier 32 comprenant un connecteur 34. Le connecteur 34 comprend un corps de connecteur 36 venu de matière avec le boîtier inférieur 14 ainsi qu'un ensemble de terminaux électriques 38 prévu pour être inséré dans le corps du connecteur 36 et prévu pour être en contact électrique avec une seconde carte à circuit imprimé 40.

La seconde carte à circuit imprimé 40 comporte des moyens de connexions électriques 42 avec la première carte à circuit imprimé 26, plus particulièrement, les moyens de connexions électriques 42 sont réalisés par des languettes élastiques fixées sur la seconde carte à circuit imprimé 40 et en contact par compression avec la première carte à circuit imprimé 26. La seconde carte à circuit imprimé 40, peut par exemple comprendre un circuit électronique de traitement d'image, notamment configuré pour détecter la présence de buée ou de glace sur une des lentilles 15 agencées sur le support de lentilles 12. Un dépôt de glace ou de buée ne peut globalement n'être présent que sur la lentille 15 en contact avec l'air extérieur au dispositif optique 10, c'est-à-dire la lentille 15 optique agencée à l'extrémité libre externe 60 du support de lentilles 12.

Le support de lentilles 12 est fixé au boitier inférieur 14 au moyen d'un second joint adhésif 44. Plus particulièrement, la base 22 du support de lentilles 12 comprend un rebord 46 externe cylindrique agencé sur la surface extérieure de la paroi cylindrique 48 de la base 22 du support de lentilles 12. Le rebord 46 est agencé entre la paroi d'extrémité supérieure 50 et l'extrémité basse 24 de la base 22 de sorte à définir une portion haute 54 et une portion basse 52 de la base 22 du support de lentilles 12. La portion basse 52 de la base 22 vient s'insérer dans le boîtier inférieur 14 jusqu'à ce que le rebord 46 de la base 22 du support de lentilles 12 vienne en butée contre le second joint 44 adhésif agencé sur la surface supérieure de l'extrémité haute 56 du boîtier inférieur 14. La surface supérieure de l'extrémité haute 56 du boîtier inférieur 14 forme ainsi une surface d'appui.

De façon optionnelle, le second joint 44 adhésif peut être réalisé par un dépôt de colle sur la surface supérieure de l'extrémité haute 56 du boîtier inférieur 14, ou encore sur le rebord 46 de la base 22 du support de lentilles 12.

Plus en détail et selon la figure 2, la portion tubulaire 16 du support de lentilles 12 s'étend selon l'axe optique O du dispositif optique 10 depuis son extrémité basse 58 agencée à l'intérieur de la base 22 jusqu'à son extrémité haute agencée en dehors de la paroi d'extrémité supérieure 50 de la base 22. L'extrémité haute de la portion tubulaire 16 du support de lentilles 12 est une extrémité libre externe 60 du support de lentilles 12. La portion tubulaire 16 du support de lentilles 12 agencée à l'intérieur de la base 22 définie un tronçon inférieur 59 du support de lentilles 12, la partie du support de lentilles 12 agencée en dehors de la base 22 définie un tronçon supérieur 57 du support de lentilles 12. Le support de lentilles 12 représenté comprend quatre lentilles 15 globalement régulièrement espacées. Cet agencement permet une structure multi lentilles tout en minimisant la longueur, selon l'axe optique O, du dispositif optique 10.

Selon la figure 2, le support de lentilles 12 est représenté fermé à l'extrémité basse 24 de la base 22 par la première carte à circuit imprimé 26 par l'intermédiaire du premier joint 28 adhésif, formant ainsi une cavité 90 interne au support de lentilles 12. Plus précisément, la cavité 90 interne au support de lentilles 12 est l'espace libre délimité par la paroi cylindrique 48 de la base 22 et la première carte à circuit imprimé 26.

De façon optionnelle, le premier joint 28 adhésif peut être réalisé par un dépôt de colle sur la face inférieure de l'extrémité basse 24 de la base 22 du support de lentilles 12 ou par un dépôt de colle sur le pourtour de la première carte à circuit imprimé 26.

Selon la figure 2, les deux ressorts hélicoïdaux 25, 27 multi spire sont agencés en compression contre l'extrémité basse 58 de la portion tubulaire 16 du support de lentilles 12. Les deux ressorts hélicoïdaux 25, 27 sont comprimés verticalement entre la première carte à circuit imprimé 26 et l'extrémité basse 58 de la portion tubulaire 16 du support de lentilles 12. De préférence, les ressorts hélicoïdaux 25, 27 sont fixés sur la première carte à circuit imprimé 26 par soudure.

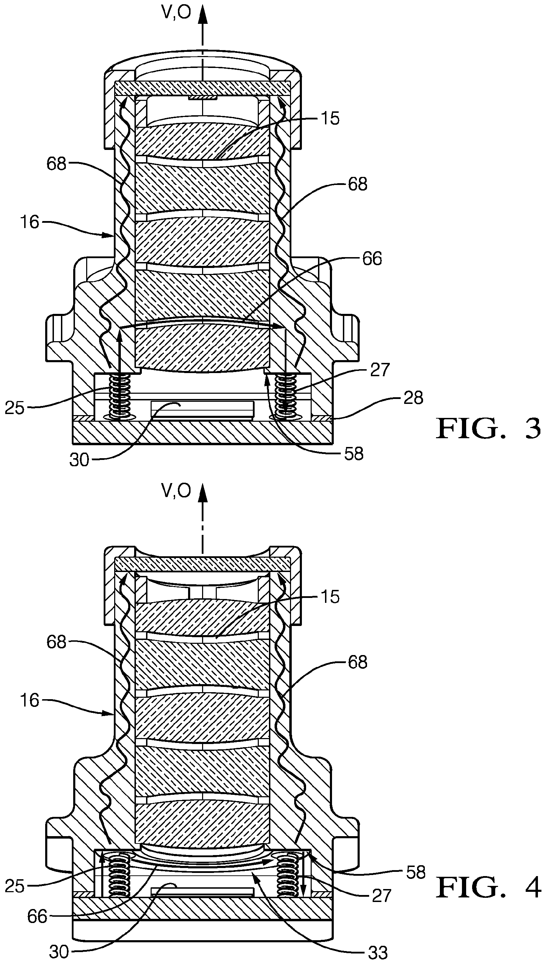

Selon la figure 3, les deux ressorts hélicoïdaux 25, 27 sont utilisés comme des éléments de chauffage électriquement conducteurs. Selon le mode de réalisation de la figure 3, les deux ressorts hélicoïdaux 25, 27 sont traversés par un courant électrique 66 de sorte à produire de la chaleur 68. Les deux ressorts hélicoïdaux 25, 27 sont agencés en appui sur l'extrémité basse 58 de la portion tubulaire 16 du support de lentilles 12. Le support de lentilles 12 étant en métal, de préférence de l'aluminium, la chaleur 68 produite par les deux ressorts hélicoïdaux 25, 27 se propage sur l'extrémité basse 58 de la portion tubulaire 16 du support de lentilles 12. La chaleur 68 se propage ensuite dans l'ensemble du support de lentilles 12, se propageant donc jusqu'à chaque lentille 15.

De préférence, la cavité interne 90 forme une cavité interne 90 hermétique de sorte à confiner l'ensemble de la chaleur entre la première carte à circuit imprimé 26 et le support de lentilles 12.

De préférence, le second joint 44 adhésif permettant de fixer le support de lentilles 12 sur le boîtier inférieur 14, est un isolant thermique de sorte à optimiser le flux de chaleur 68 dans le support de lentilles 12, et donc pour minimiser une dissipation de chaleur 68 vers le boîtier inférieur 14.

De même, de préférence, le premier joint 28 adhésif permettant de fixer le support de lentilles 12 sur la première carte à circuit imprimé 26 est un isolant thermique de sorte à minimiser le retour de la chaleur 68 par conduction thermique vers la première carte à circuit imprimé 26 depuis le support de lentilles 12.

Selon le premier mode de réalisation illustré à la figure 3, le courant électrique 66 provenant de la première carte à circuit imprimé 26 est injecté au travers du premier ressort hélicoïdal 25. L'extrémité du premier ressort hélicoïdal 25 en contact électrique avec la première carte à circuit imprimé 26 est donc reliée électriquement à une source de courant électrique (non représentée). La source du courant électrique 66, peut, de manière non limitative, être agencée aussi bien sur la première carte à circuit imprimé 26 que sur la seconde carte à circuit imprimé 40, la seconde carte à circuit imprimé 40 étant en contact électrique avec la première carte à circuit imprimé 26. L'extrémité du second ressort hélicoïdal 27 est en contact électrique avec une masse électrique de la première carte à circuit imprimé 26 de sorte que le courant électrique 66 circule depuis le premier ressort hélicoïdal 25 vers le second ressort hélicoïdal 27. Le chemin du courant électrique 66 (illustré par les flèches) entre les deux ressorts hélicoïdaux 25, 27 se fait au travers du support de lentilles 12, le dit support de lentilles 12 étant en métal conducteur tel que l'aluminium.

De préférence, afin de maximiser le courant électrique 66 pouvant circuler dans le second ressort hélicoïdal 27, le support de lentilles 12 ne doit pas avoir d'autres liaisons électriques vers d'autres masses électriques. En d'autres termes, par exemple, de façon non limitative, le support de lentilles 12 peut être isolé électriquement du boîtier inférieur 14 en sélectionnant un second joint 44 adhésif de type isolant électrique, le boîtier inférieur 14 pouvant être relié à la masse électrique du véhicule sur lequel le dispositif optique 10 pourrait être monté.

Selon la figure 4, et selon un second mode de réalisation, le dispositif optique 10 de la figure 1 comprend de plus un élément additionnel de connexion électrique entre le premier ressort hélicoïdal 25 et le second ressort hélicoïdal 27. Cet élément additionnel forme un chemin préféré (illustré par les flèches) pour le courant électrique 66 circulant depuis le premier ressort hélicoïdal 25 jusqu'au second ressort hélicoïdal 27. Cet élément additionnel est plaqué contre le support de lentilles 12. Plus particulièrement, selon l'agencement du premier ressort hélicoïdal 25 et du second ressort hélicoïdal 27, l'élément additionnel de connexion électrique est plaqué contre l'extrémité basse 58 de la portion tubulaire 16 du support de lentilles 12.

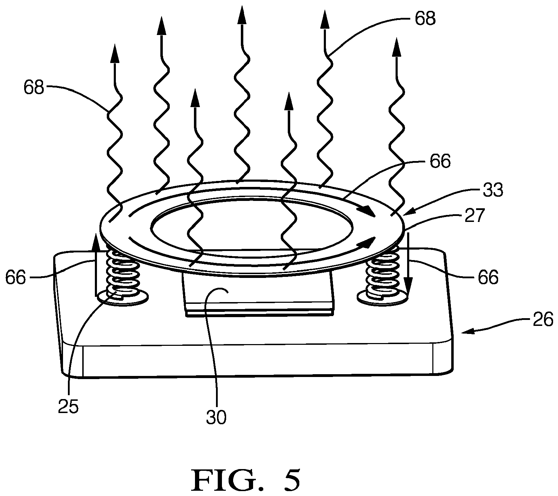

Selon le second mode de réalisation illustré à la figure 4 et la figure 5, et de manière particulière, l'élément additionnel de connexion électrique est une coupelle 33 métallique plane de forme annulaire creuse, c'est à dire ouverte en son centre, de sorte à ne pas obturer le circuit électronique de capture d'images 30 aligné selon l'axe optique O avec la lentille optique 15. La partie annulaire de la coupelle 33 est donc agencée entièrement plaquée contre l'extrémité basse 58 métallique de la portion tubulaire 16 du support de lentilles 12. Plus précisément, la face supérieure de la partie annulaire plane de la coupelle 33 est en appui contre l'extrémité basse 58 de la portion tubulaire 16 du support de lentilles 12. La coupelle 33 est configurée de sorte que lorsqu'elle est traversée par le courant électrique 66 circulant depuis le premier ressort hélicoïdal 25 jusqu'au second ressort hélicoïdal 27, la coupelle 33 dégage de la chaleur 68 uniformément tout le long de son périmètre circulaire. De la sorte, la chaleur 68 produite est plus uniformément diffusée vers le support de lentilles 12, et chauffera plus efficacement les lentilles 15.

De préférence, et de façon non limitative, la partie annulaire de la coupelle 33 pourra être fixée plaquée contre l'extrémité basse 58 métallique de la portion tubulaire 16 du support de lentilles 12 à l'aide d'une pâte adhésive thermiquement conductrice et électriquement isolante de sorte à favoriser le transfert de chaleur 68 entre la coupelle 33 et le support de lentilles 12, tout en privilégiant un chemin unique pour le courant électrique 66 généré au travers du premier ressort hélicoïdal 25.

Selon ce mode de réalisation, les deux ressorts hélicoïdaux 25, 27 sont donc agencés en compression entre la première carte à circuit imprimé 26 et le support de lentilles 12 par l'intermédiaire de la coupelle 33. En d'autre terme, l'extrémité libre haute de chaque ressort hélicoïdal 25, 27 est donc en contact électrique direct avec la coupelle 33.

De façon particulière, selon le premier mode de réalisation illustré à la figure 3 et selon le second mode de réalisation illustré à la figure 4, les deux ressorts hélicoïdaux 25, 27 sont agencés de façon diamétralement opposée autour du circuit électronique de capture d'images 30. Cet arrangement permet de répartir au mieux la diffusion de chaleur 68 provenant des deux ressorts hélicoïdaux 25, 27 vers le support de lentilles 12.

Selon le premier mode de réalisation, une méthode de chauffage des lentilles 15 du dispositif optique 10 permettant leur dégivrage ou leur désembuage comporte une étape de circulation du courant électrique 66 dans les deux ressorts hélicoïdaux 25, 27 de sorte à générer de la chaleur 68. Ensuite, puisque les deux ressorts hélicoïdaux 25, 27 sont en appui contre le support de lentilles 12 en métal, l'étape suivant consiste en la transmission de la chaleur 68 généré par les deux ressorts hélicoïdaux 25, 27 au support de lentilles 12 puis enfin le chauffage des lentilles est réalisé grâce à la conduction de la chaleur 68 à travers le support de lentilles 12 métallique jusqu'à chaque lentille 15 optique du support de lentilles 12.

Bien que de façon général, le courant électrique 68 transite du premier ressort hélicoïdal 25 vers le second ressort hélicoïdal 27 via le support de lentilles 12 métallique, plus particulièrement et selon le second mode de réalisation, une étape de la méthode de chauffage des lentilles 15 optiques du dispositif optique 10 peut comprendre une étape de circulation du courant électrique 66 au travers d'un élément additionnel de connexion électrique entre les deux ressort hélicoïdaux 25, 27, telle par exemple la coupelle 33 annulaire plane creuse. Cet élément additionnel de connexion électrique étant agencé entièrement plaqué contre l'extrémité basse 58 métallique de la portion tubulaire 16 du support de lentilles 12 et étant configuré pour produire de la chaleur 68 uniformément tout le long de son périmètre circulaire, la chaleur 68 produite est plus uniformément diffusée vers le support de lentilles 12, et chauffera plus efficacement les lentilles 15.

De façon préféré, la méthode peut comprendre une étape préalable à la circulation d'un courant électrique dans les deux ressorts hélicoïdaux 25, 27 de sorte à générer de la chaleur 68 consistant en une étape de détection de glace et/ou de buée sur les lentilles 15 du dispositif optique 10. Un dépôt de glace ou de buée ne peut globalement n'être présent que sur la lentille 15 en contact avec l'air extérieur au dispositif optique 10, c'est-à-dire la lentille 15 optique agencée à l'extrémité libre externe 60 du support de lentilles 12.

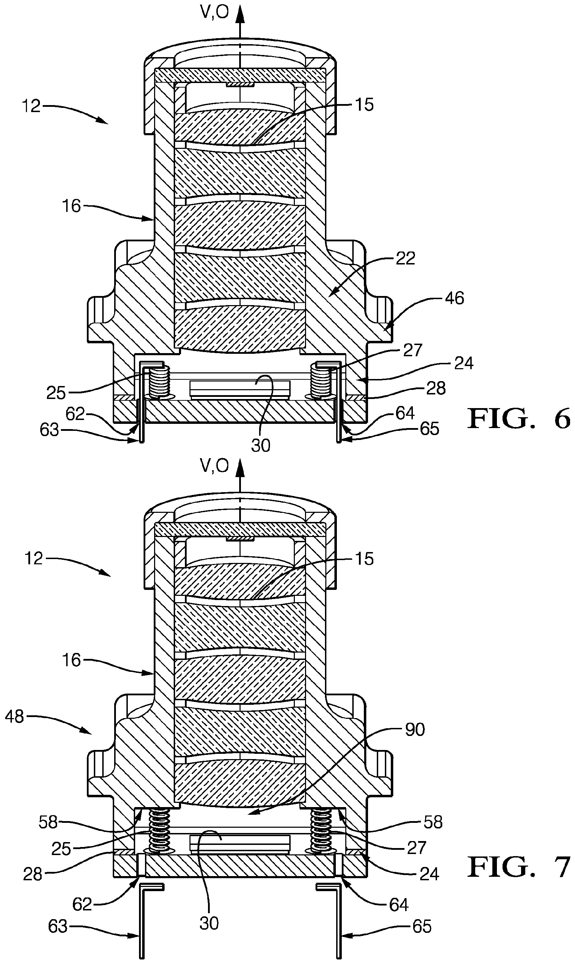

Selon la figure 6 et la figure 7, le dispositif optique 10 est représenté selon un troisième mode de réalisation particulier selon lequel la première carte à circuit imprimé 26 comprend une première ouverture 62 et une seconde ouverture 64. La première ouverture 62 et la seconde ouverture 64 sont respectivement agencées à proximité immédiate de l'extrémité du premier ressort hélicoïdal 25 et du second ressort hélicoïdal 27 en contact électrique avec la première carte à circuit imprimé 26.

Selon la figure 6, lors de l'alignement, selon l'axe optique O du dispositif 10, du circuit électronique de capture d'images 30 avec les lentilles optiques 15, une première tige de maintien 63 et une seconde tige de maintien 65, chacune introduite respectivement dans la première ouverture 62 et la seconde ouverture 64, maintiennent respectivement le premier ressort hélicoïdal 25 et le second ressort hélicoïdal 27 dans une position hors contrainte élastique contre le support de lentilles 12. En d'autres termes, les deux ressorts hélicoïdaux 25, 27 sont compressés au moyens des deux tiges de maintien 63, 65 de sorte à ne pas être en appui contre l'extrémité basse 58 de la portion tubulaire 16 du support de lentilles 12, de sorte à ne pas exercer de contraintes additionnelles à la première carte à circuit imprimé 26 lors de l'opération d'alignement selon l'axe optique O du dispositif 10, du circuit électronique de capture d'images 30 avec les lentilles optiques 15.

Selon la figure 7, lorsque l'alignement est terminé, les deux tiges de maintien 63, 65 sont extraites hors de la première carte à circuit imprimé 26 par les deux ouvertures 62, 64 de sorte que les deux ressorts hélicoïdaux 25, 27 se déplient et viennent chacun en appui contre l'extrémité basse 58 de la portion tubulaire 16 du support de lentilles 12.

De façon particulière, les deux ouvertures 62, 64 peuvent être bouchées par une pâte adhésive fixée côté face inférieure de la première carte à circuit imprimé 26 de sorte à rendre totalement hermétique la cavité 90 interne au support de lentilles 12.

De manière alternative au premier et au troisième mode de réalisation, le dispositif optique 10 peut ne comprendre que le premier ressort hélicoïdal 25. Dans cette alternative, le chemin du courant électrique 66 pourra être opérationnel par la mise à la masse électrique du support de lentilles 12.

De manière alternative au second mode de réalisation, le dispositif optique 10 peut ne comprendre que le premier ressort hélicoïdal 25. De préférence, pour ce mode de réalisation, la coupelle 33 plane annulaire pourra conduire le courant électrique 66 jusqu'à une masse électrique. Dans ce mode de réalisation alternatif, la coupelle 33 peut être en contact direct avec le support de lentilles 12 en un point particulier, de préférence le plus éloigné du premier ressort hélicoïdal 25, le reste de la coupelle 33 étant plaqué contre le support de lentilles 12 par l'intermédiaire d'un adhésif isolant électrique.

Selon le premier mode de réalisation, une méthode d'assemblage du dispositif optique 10 comporte une étape de fourniture du support de lentilles 12 métallique comprenant les lentilles optiques 15, ainsi que la fourniture de la première carte à circuit imprimé 26 comprenant les deux ressorts hélicoïdaux 25, 27 électriquement conducteur et le circuit électronique de capture d'images 30. Une autre étape d'assemblage consiste à agencer le support de lentilles 12 sur la première carte à circuit imprimé 26 en alignant, selon l'axe optique O du dispositif optique 10, le circuit électronique de capture d'images 30 et les lentilles optiques 15 tout en agençant l'extrémité haute libre des deux ressorts hélicoïdaux 25, 27 en compression entre le support de lentilles 12 et la première carte à circuit imprimé 26.

Afin de faciliter l'alignement, selon l'axe optique O du dispositif optique 10, du circuit électronique de capture d'images 30 et des lentilles optiques 15, et selon le troisième mode de réalisation, l'étape d'agencement du support de lentilles 12 sur la première carte à circuit imprimé 26 peut comprendre une étape de maintien des deux ressorts hélicoïdaux 25, 27 dans une position hors contrainte élastique contre le support de lentilles 12. Puis, lorsque l'alignement est effectué et que de préférence la première carte à circuit imprimé 26 a été fixée au support de lentilles 12 par le premier joint 28 adhésif, la méthode consiste à relâcher le maintien des deux ressorts hélicoïdaux 25, 27 de sorte que leur extrémité haute libre soit en appui contre le support de lentilles 12, plus particulièrement, en appui contre l'extrémité basse 58 de la portion tubulaire 16 du support de lentilles 12. Le maintien des deux ressorts hélicoïdaux 25, 27 dans la position hors contraintes élastique contre le support de lentilles 12, plus précisément contre l'extrémité basse 58 de la portion tubulaire 16 du support de lentilles 12, ainsi que le relâchement du maintien des deux ressorts hélicoïdaux 25, 27, peuvent s'effectuer à l'aide de deux tiges de maintien 63, 65 introduites puis extraites de la cavité 90 interne au support de lentilles 12 via les deux ouvertures 62, 64 de la première carte à circuit imprimé 26.

Une étape supplémentaire de bouchage des deux ouvertures 62, 64 de la première carte à circuit imprimé 26, notamment par collage d'une pâte adhésive fixée côté face inférieure de la première carte à circuit imprimé 26, peut être envisagée de sorte à rendre totalement hermétique la cavité 90 interne au support de lentilles 12.

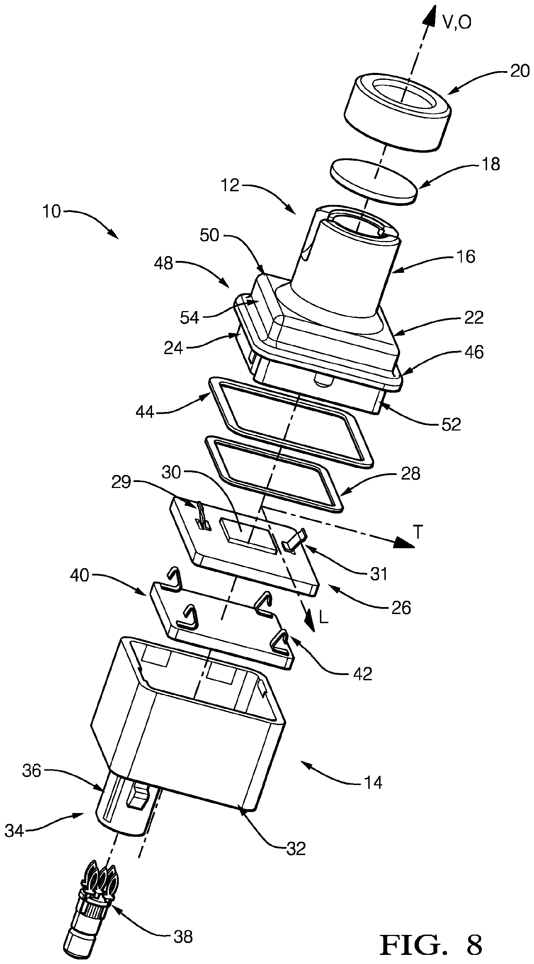

Les figures 8 à 14 de la présente invention, représentent un quatrième, un cinquième et un sixième mode de réalisation, étant respectivement des alternatives au premier mode de réalisation, au second mode de réalisation et au troisième mode de réalisation.

Toutes ces alternatives consistent à l'utilisation d'un premier ressort à lame 29 élastique et d'un second ressort à lame 31 élastique au lieu, du premier ressort hélicoïdal 25 et du second ressort hélicoïdal 27 comme éléments de chauffage du dispositif optique 10. Les autres éléments du dispositif optique 10 sont identiques aux modes de réalisation décrits précédemment.

Selon la figure 8, la première carte à circuit imprimé 26 comprend le circuit électronique de capture d'images 30 aligné avec les lentilles optiques 15 selon l'axe optique O du dispositif optique 10, ainsi que deux ressorts à lame 29, 31 agencés sur la face supérieure de la première carte à circuit imprimé 26 et s'étendant de manière oblique vers le rebord de la première carte à circuit imprimé 26. Plus particulièrement, le premier ressort à lame 29 et le second ressort à lame 31 sont agencés chacun de part et d'autre du circuit électronique de capture d'images 30 et sont chacun orientés de manière oblique par rapport à l'axe vertical V vers l'extérieur de la première carte à circuit imprimé 26. Autrement dit, le premier ressort à lame 29 et le second ressort à lame 31 sont agencés opposés l'un à l'autre, de part et d'autre du circuit électronique de capture d'images 30, et sont orientés obliquement chacun dans une direction inverse l'un de l'autre vers la bordure de la première carte à circuit imprimé 26. De préférence, les deux ressorts à lame 29, 31 sont fixés sur la première carte à circuit imprimé 26 par soudure. Les deux ressorts à lames 29, 31 sont configurés pour venir en appui contre la face interne 61de la paroi cylindrique 48 de la base 22 du support de lentilles 12.

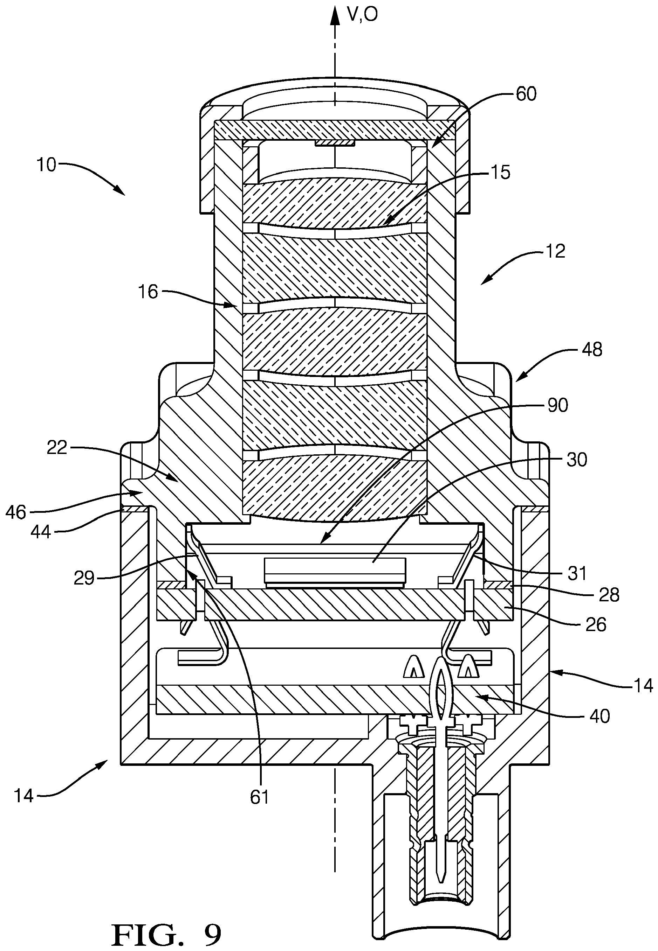

Plus précisément et selon la figure 9, lorsque la première carte à circuit imprimé 26 est agencée contre l'extrémité basse 24 de la base 22 du support de lentilles 12, chaque ressort à lame 29, 31 est agencé en appui élastique contre la face interne 61 de la paroi cylindrique 48 de la base 22. La force d'appui des ressorts à lame 29, 31 contre la face interne 61 de la paroi cylindrique 48 de la base 22 offre un meilleur maintien et donc une plus grande stabilité de la première carte à circuit imprimé 26 montée contre le support de lentilles 12, permettant ainsi une plus grande stabilité de l'alignement selon l'axe optique O du dispositif optique 10, du circuit électronique de capture d'images 30 avec les lentilles optiques 15.

Les éléments de fixations de la première carte à circuit imprimé 26 contre le support de lentilles 12, c'est-à-dire le premier joint 28 adhésif, les languettes élastiques fixées sur la seconde carte à circuit imprimé 40 et en contact par compression avec la première carte à circuit imprimé 26, ainsi que les deux ressorts à lame 29, 31 offre une simplicité d'assemblage du dispositif optique 10 en comparaison avec de fixations à vis, couteuses et nécessitant des étapes supplémentaire de vissage lors de l'assemblage du dispositif optique 10.

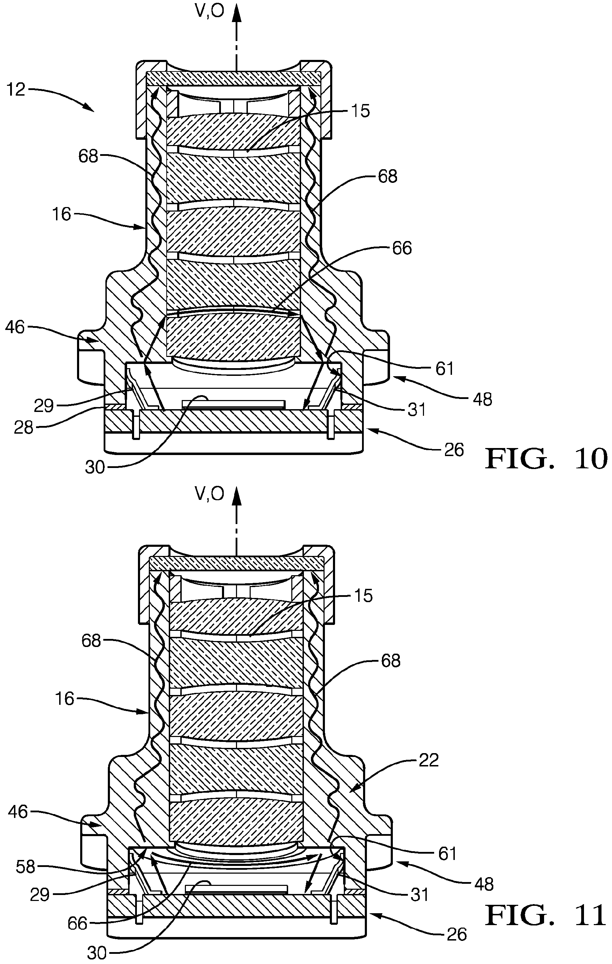

Selon le quatrième mode de réalisation illustré à la figure 10, le courant électrique 66 provenant de la première carte à circuit imprimé 26 est injecté au travers du premier ressort à lame 29. L'extrémité du premier ressort à lame 29 en contact électrique avec la première carte à circuit imprimé 26 est donc reliée électriquement à une source de courant électrique (non représentée). La source du courant électrique 66, peut, de manière non limitative, être agencée aussi bien sur la première carte à circuit imprimé 26 que sur la seconde carte à circuit imprimé 40, la seconde carte à circuit imprimé 40 étant en contact électrique avec la première carte à circuit imprimé 26. L'extrémité du second ressort à lame 31 agencé sur la première carte à circuit imprimé 26 est en contact électrique avec une masse électrique de la première carte à circuit imprimé 26 de sorte que le courant électrique 66 circule depuis le premier ressort à lame 29 vers le second ressort à lame 31. Le chemin électrique (illustré par les flèches) du courant électrique 66 entre les deux ressorts à lame 29, 31 se fait au travers du support de lentilles 12, le dit support de lentilles 12 étant en métal conducteur tel que l'aluminium.

De préférence, afin de maximiser le courant électrique 66 pouvant circuler dans le second ressort à lame 31, le support de lentilles 12 ne doit pas avoir d'autres liaisons électriques vers d'autres masses électriques. En d'autres termes, par exemple, de façon non limitative, le support de lentilles 12 peut être isolé électriquement du boîtier inférieur 14 en sélectionnant un second joint 44 adhésif de type isolant électrique, le boîtier inférieur 14 pouvant être relié à la masse du véhicule sur lequel le dispositif optique 10 pourrait être monté.

Selon la figure 11, et selon un cinquième mode de réalisation, le dispositif optique 10 de la figure 8 comprend de plus un autre élément additionnel de connexion électrique entre le premier ressort à lame 29 et le second ressort à lame 31. Cet autre élément additionnel forme un chemin préféré (illustré par les flèches) pour le courant électrique 66 circulant depuis le premier ressort à lame 29 jusqu'au second ressort à lame 31. Cet autre élément additionnel est plaqué contre le support de lentilles 12. Plus particulièrement, selon l'agencement du premier ressort à lame 29 et du second ressort à lame 31, l'autre élément additionnel de connexion électrique est plaqué contre l'extrémité basse 58 de la portion tubulaire 16 du support de lentilles 12.

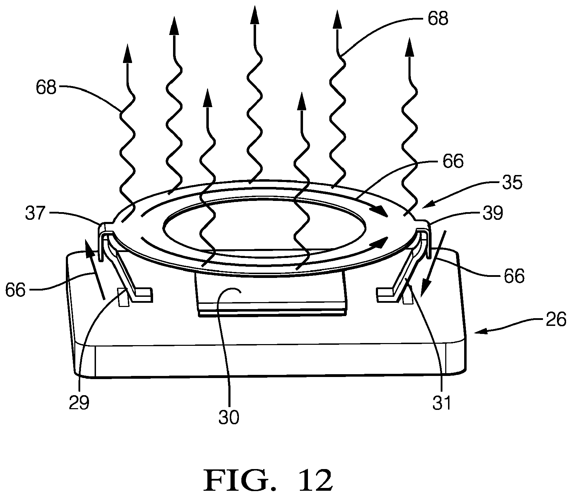

Selon un mode de réalisation particulier illustré à la figure 11 et à la figure 12, l'autre élément additionnel de connexion électrique est une autre coupelle 35 métallique plane de forme annulaire creuse, c'est à dire ouverte en son centre, de sorte à ne pas obturer le circuit électronique de capture d'images 30 aligné selon l'axe optique avec les lentilles optiques 15. L'autre coupelle 35 comporte de plus un premier ergot 37 et un second ergot 39 s'étirant globalement verticalement vers le bas depuis le périmètre extérieur de la partie annulaire de l'autre coupelle 35. De préférence les deux ergots 37, 39 sont agencés de manière diamétralement opposée le long du périmètre extérieur de la partie annulaire de l'autre coupelle 35. Chaque ergot 37, 39 comporte une surface d'appui contre laquelle l'extrémité libre d'un ressort à lame 29 vient s'appuyer de manière élastique, exerçant ainsi une force d'appui garantissant le contact électrique entre chaque ressort à lame 29, 31 et l'autre coupelle 35.

La partie annulaire de l'autre coupelle 35 est donc agencée entièrement plaquée contre l'extrémité basse 58 métallique de la portion tubulaire 16 du support de lentilles 12. L'autre coupelle 35 est configurée de sorte que lorsqu'elle est traversée par le courant électrique 66 circulant depuis le premier ressort à lame 29 jusqu'au second ressort à lame 31, l'autre coupelle 35 annulaire dégage de la chaleur 68 uniformément tout le long de son périmètre circulaire. De la sorte, la chaleur 68 produite est plus uniformément diffusée vers le support de lentilles 12, et chauffera plus efficacement les lentilles optiques 15.

Selon le quatrième mode de réalisation, une méthode de chauffage des lentilles 15 du dispositif optique 10 permettant leur dégivrage ou leur désembuage comporte une étape de circulation du courant électrique 66 dans les deux ressorts à lame 29, 31 de sorte à générer de la chaleur 68. Ensuite, puisque les deux ressorts à lame 29, 31 sont en appui contre le support de lentilles 12 en métal, l'étape suivant consiste en la transmission de la chaleur 68 généré par les deux ressorts hélicoïdaux 25, 27 au support de lentilles 12 puis enfin le chauffage des lentilles est réalisé grâce à la conduction de la chaleur 68 à travers le support de lentilles 12 métallique jusqu'à chaque lentille 15 optique du support de lentilles 12.

Bien que de façon général, le courant électrique 68 transite du premier ressort à lame 29 vers le second ressort à lame 31 via le support de lentilles 12 métallique, plus particulièrement et selon le cinquième mode de réalisation, une étape de la méthode de chauffage des lentilles 15 optiques du dispositif optique 10 peut comprendre une étape de circulation du courant électrique 66 au travers d'un élément additionnel de connexion électrique entre les deux ressort à lame 29, 31 telle par exemple l'autre coupelle 35 annulaire plane creuse. Cet élément additionnel de connexion électrique étant agencé entièrement plaqué contre l'extrémité basse 58 métallique de la portion tubulaire 16 du support de lentilles 12 et étant configuré pour produire de la chaleur 68 uniformément tout le long de son périmètre circulaire, la chaleur 68 produite est plus uniformément diffusée vers le support de lentilles 12, et chauffera plus efficacement les lentilles 15.

De façon préféré, la méthode peut comprendre une étape préalable à la circulation d'un courant électrique dans les deux ressorts à lame 29, 31 de sorte à générer de la chaleur 68 consistant en une étape de détection de glace et/ou de buée sur les lentilles 15 du dispositif optique 10. Un dépôt de glace ou de buée ne peut globalement n'être présent que sur la lentille 15 en contact avec l'air extérieur au dispositif optique 10, c'est-à-dire la lentille 15 optique agencée à l'extrémité libre externe 60 du support de lentilles 12.

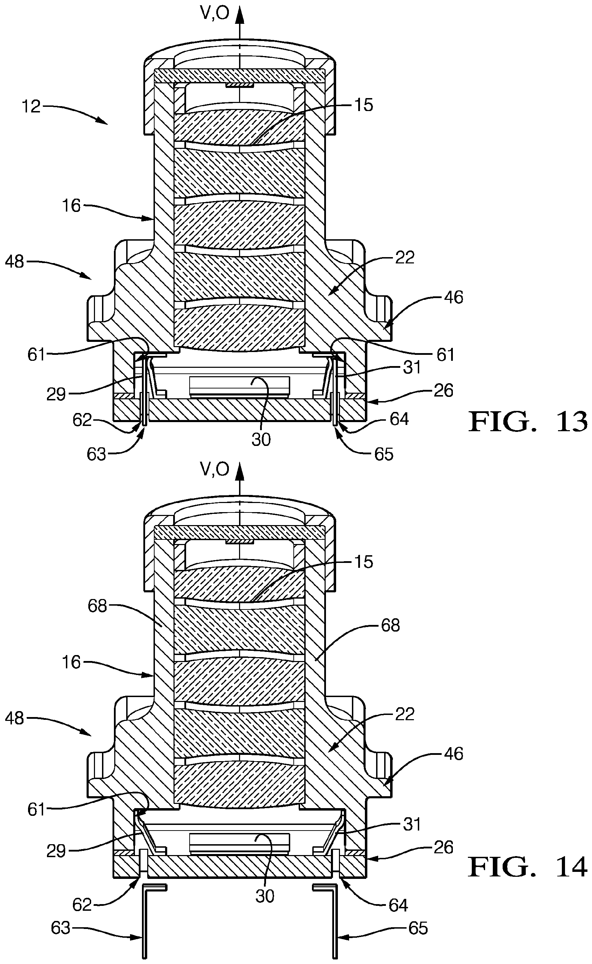

Selon la figure 13 et la figure 14, le dispositif optique 10 est représenté selon le sixième mode de réalisation particulier selon lequel la première carte à circuit imprimé 26 comprend les deux ouvertures 62, 64, agencées de manière similaire au troisième mode de réalisation. La première ouverture 62 et la seconde ouverture 64 sont respectivement agencées à proximité immédiate de l'extrémité du premier ressort à lame 29 et du second ressort à lame 31 en contact électrique avec la première carte à circuit imprimé 26. Plus précisément, la première ouverture 62 et la seconde ouverture 64 sont agencées respectivement sous la potion oblique du premier ressort à lame 29 et du second ressort à lame 31, de sorte à ce que l'introduction d'une tige de maintien 63, 65 dans une des ouvertures 62, 64, provoque un redressement vertical du ressort à lame 29 associé à l'ouverture 62

Selon la figure 13, lors de l'alignement, selon l'axe optique O du dispositif optique 10, du circuit électronique de capture d'images 30 avec la lentille optique, la première tige de maintien 63 et la seconde tige de maintien 65, chacune étant introduite respectivement dans la première ouverture 62 et la seconde ouverture 64, maintiennent respectivement le premier ressort à lame 29 et le second ressort à lame 31 dans une position hors contrainte élastique contre le support de lentilles 12, plus précisément, de sorte à ne pas être en appui contre la face interne 61 de la paroi cylindrique 48 de la base 22 du support de lentilles 12. En d'autres termes, les deux ressorts à lame 29, 31 sont maintenus globalement verticalement au moyen des deux tiges de maintien 63, 65 de sorte à ne pas être en appui contre la face interne 61 de la paroi cylindrique 48 de la base 22 du support de lentilles 12, de sorte à ne pas exercer de contraintes additionnelles à la première carte à circuit imprimé 26 lors de l'opération d'alignement selon l'axe optique O du dispositif 10, du circuit électronique de capture d'images 30 avec les lentilles optiques 15.

Selon la figure 14, lorsque l'alignement est terminé, chaque tige 63, 65 de maintien est extraite par son ouverture 62, 64 associée hors de la première carte à circuit imprimé 26 de sorte que les deux ressorts à lame 29, 31, sous l'effet de leur élasticité, viennent chacun en appui contre la face interne 61 de la paroi cylindrique 48 de la base 22 du support de lentilles 12.

Il est à noter que les deux tiges de maintien 63, 65 de ce sixième mode de réalisation peuvent être identiques aux tiges de maintien 63, 65 du troisième mode de réalisation. Dans le cas du troisième mode de réalisation, l'extrémité haute des deux tiges de maintien 63, 65 présentant une forme courbée, permet la mise en compression des deux ressorts hélicoïdaux 25, 27 de sorte à ce que les deux ressorts hélicoïdaux 25, 27 ne soient pas en appui contre l'extrémité basse 58 de la portion tubulaire 16 du support de lentilles 12, alors que dans le sixième mode de réalisation, c'est la partie verticale des deux tiges de maintien 63, 65 qui maintien les deux ressorts à lame 29, 31 hors de la position d'appui contre la face interne 61 de la paroi cylindrique de la base 22 du support de lentilles 12.

De manière alternative au quatrième, et au sixième mode de réalisation, le dispositif optique 10 peut ne comprendre que le premier ressort à lame 29. Dans cette alternative, le chemin du courant électrique 66 pourra être opérationnel par la mise à la masse électrique du support de lentilles 12.

De manière alternative au cinquième mode de réalisation, le dispositif optique 10 peut ne comprendre que le premier ressort à lame 29. De préférence, pour ce mode de réalisation, l'autre coupelle 35 plane annulaire pourra conduire le courant électrique 66 jusqu'à une masse électrique. Dans ce mode de réalisation alternatif, la partie annulaire de l'autre coupelle 35 peut être en contact direct avec le support de lentilles 12 en un point particulier, de préférence le plus éloigné du premier ressort à lame 29, le reste de la partie annulaire de l'autre coupelle 35 étant plaquée contre le support de lentilles 12 par l'intermédiaire d'un adhésif isolant électrique.

Selon le quatrième mode de réalisation, une méthode d'assemblage du dispositif optique 10 comporte une étape de fourniture du support de lentilles 12 métallique comprenant les lentilles optiques 15, ainsi que la fourniture de la première carte à circuit imprimé 26 comprenant les deux ressorts à lame 29, 31 électriquement conducteur et le circuit électronique de capture d'images 30. Une autre étape d'assemblage consiste à agencer le support de lentilles 12 sur la première carte à circuit imprimé 26 en alignant, selon l'axe optique O du dispositif optique 10, le circuit électronique de capture d'images 30 et la lentille optique 15 tout en agençant l'extrémité haute libre des deux ressorts à lame 29, 31 en appui élastique contre la face interne 61 de la paroi cylindrique 48 de la base 22 du support de lentilles 12.

Afin de faciliter l'alignement, selon l'axe optique O du dispositif optique 10, du circuit électronique de capture d'images 30 et de la lentille optique 15, et selon le sixième mode de réalisation, l'étape d'agencement du support de lentilles 12 sur la première carte à circuit imprimé 26 peut comprendre une étape de maintien des deux ressorts à lame 29, 31 dans une position hors contrainte élastique contre le support de lentilles 12, plus particulièrement hors contrainte élastique en appui élastique contre la face interne 61 de la paroi cylindrique 48 de la base 22 du support de lentilles 12.

Puis, lorsque l'alignement est effectué et que de préférence la première carte à circuit imprimé 26 a été fixée au support de lentilles 12 par le premier joint 28 adhésif, la méthode consiste à relâcher le maintien des deux ressorts à lame 29, 31 de sorte que leur extrémité haute libre soit en appui contre la face interne 61 de la paroi cylindrique 48 de la base 22 du support de lentilles 12. Le maintien des deux ressorts à lame 29, 31 dans la position hors contraintes élastique contre le support de lentilles 12, plus précisément contre la face interne 61 de la paroi cylindrique 48 de la base 22 du support de lentilles 12, ainsi que le relâchement du maintien des deux ressorts à lame 29, 31 peut s'effectuer à l'aide de deux tiges de maintien 63, 65 introduites puis extraites de la cavité 90 interne au support de lentilles 12 via les deux ouvertures 62, 64 de la première carte à circuit imprimé 26.

Une étape supplémentaire de bouchage des deux ouvertures 62, 64 de la première carte à circuit imprimé 26, notamment par collage d'une pâte adhésive fixée côté face inférieure de la première carte à circuit imprimé 26, peut être envisagée de sorte à rendre totalement hermétique la cavité 90 interne au support de lentilles 12.

## Revendications

1. Dispositif optique (10) comprenant
une carte à circuit imprimé (26) comprenant un circuit électronique de capture d'images (30),
un support de lentilles (12) comprenant au moins une lentille optique (15), le support de lentilles (12) étant monté sur la carte à circuit imprimé (26) de sorte à aligner, selon l'axe optique (O) du dispositif (10), le circuit électronique de capture d'images (30) et la lentille optique (15); et
au moins un premier élément de chauffage (25, 29) électriquement conducteur agencé en contact électrique sur la carte à circuit imprimé (26), entre le support de lentilles (12) et la carte à circuit imprimé (26), et en appui contre le support de lentilles (12), le premier élément de chauffage (25, 29) étant configuré pour être traversé par un courant électrique (66) provenant de la carte à circuit imprimé (26), de sorte à générer de la chaleur (68) qui est transmise au support de lentilles (12), et le support de lentilles (12) étant métallique et l'élément de chauffage (25, 29) étant un ressort agencé en contrainte élastique entre le support de lentilles (12) et la carte à circuit imprimé (26).

2. Dispositif optique (10) selon la revendication 1, **caractérisé en ce qu'**il comprend un second élément de chauffage (27, 31) agencé de manière similaire au premier élément de chauffage (25, 29), le second élément de chauffage (27, 31) étant configuré pour être connecté à une masse électrique de la carte à circuit imprimé (26).

3. Dispositif optique (10) selon la revendication 2, **caractérisé en ce qu'**il comprend un élément additionnel de connexion électrique (33, 35) entre le premier élément de chauffage (25, 29) et le second élément de chauffage (27, 31), le dit élément additionnel de connexion électrique (33, 35) étant plaqué contre le support de lentilles (12).

4. Dispositif optique (10) selon l'une quelconque des revendications précédentes,
**caractérisé en ce que** l'élément de chauffage (25) est un ressort hélicoïdal multi-spire agencé en compression entre le support de lentilles (12) et la carte à circuit imprimé (26).

5. Dispositif optique (10) selon l'une quelconque des revendications 1 à 3, **caractérisé en ce que** le support de lentilles (12) comporte une base (22) cylindrique ouverte à son extrémité basse (24) s'étendant selon l'axe optique (O), la carte à circuit imprimé (26) étant agencée contre l'extrémité basse (24) de la base (22) formant ainsi une cavité (90) interne au support de lentilles (12), et **en ce que** l'élément de chauffage (29) est un ressort à lame agencé en appui élastique contre la face interne (61) de la paroi cylindrique (48) de la base (22).

6. Dispositif optique (10) selon l'une quelconque des revendications précédentes, **caractérisé en ce que** la carte à circuit imprimé (26) comprend une ouverture (62) à proximité du premier élément de chauffage (25, 29), la dite ouverture (62) étant prévue pour y insérer une tige de maintien (63) du premier élément de chauffage (25, 29) dans une position hors contrainte contre le support de lentilles (12) lors de l'alignement, selon l'axe optique (O) du dispositif (10), du circuit électronique de capture d'images (30) et de la lentille optique (15).

7. Méthode d'assemblage d'un dispositif optique (10) de l'une quelconque des revendications précédentes, **caractérisée en ce qu'**elle comprend les étapes de :
fourniture d'un support de lentilles (12) métallique comprenant au moins une lentille optique (15);
fourniture d'une carte à circuit imprimé (26) comprenant un élément de chauffage (25, 29) électriquement conducteur et un circuit électronique de capture d'images (30);
agencement du support de lentilles (12) sur la carte à circuit imprimé (26) électronique de capture d'images (30) de sorte à aligner, selon l'axe optique (O) du dispositif (10), le circuit électronique de capture d'images (30) et la lentille optique (15); et de sorte à agencer l'élément de chauffage (25, 29) entre le support de lentilles (12) et la carte à circuit imprimé (26), et en appui contre le support de lentilles (12).

8. Méthode d'assemblage de la revendication 7, **caractérisée en ce que** l'étape d'agencement du support de lentilles (12) sur la carte à circuit imprimé (26) comprend les étapes de:
maintenir l'élément de chauffage (25, 29) dans une position hors contrainte élastique contre le support de lentilles (12) lors de l'alignement, selon l'axe optique (O) du dispositif (10), du circuit électronique de capture d'images (30) et de la lentille optique (15), et
agencer l'élément de chauffage (25, 29) en appui contre le support de lentilles (12) après l'alignement, selon l'axe optique (O) du dispositif (10), du circuit électronique de capture d'images (30) et de la lentille optique (15).

9. Méthode de chauffage de lentilles du dispositif optique (10) de l'une quelconque des revendications 1 à 6, **caractérisée en ce qu'**elle comporte les étapes de :
circulation d'un courant électrique (66) dans l'élément de chauffage (25, 29) de la carte à circuit imprimé (26) de sorte à générer de la chaleur (68) de l'élément de chauffage (25, 29) en appui contre le support de lentilles (12) métallique;
transmission de la chaleur (68) de l'élément de chauffage (25, 29) au support de lentilles (12) ;
conduction de la chaleur (68) à travers le support de lentilles (12) métallique jusqu'à chaque lentille optique (15) du support de lentilles (12).

## Patentansprüche

1. Optische Vorrichtung (10) umfassend
eine Leiterplatte (26) mit einer elektronischen Bilderfassungsschaltung (30),
einen Linsenhalter (12), umfassend zumindest eine optische Linse (15), wobei der Linsenhalter (12) so auf der Leiterplatte (26) montiert ist, dass er die elektronische Bilderfassungsschaltung (30) und die optische Linse (15) entlang der optischen Achse (O) der Vorrichtung (10) ausrichtet; und
zumindest ein erstes elektrisch leitendes Heizelement (25, 29), das in elektrischem Kontakt auf der Leiterplatte (26) zwischen dem Linsenhalter (12) und der Leiterplatte (26) gestaltet ist und am Linsenhalter (12) anliegt, wobei das erste Heizelement (25, 29) so konfiguriert ist, dass es von einem von der Leiterplatte (26) kommenden elektrischen Strom (66) durchflossen wird, um Wärme (68) zu erzeugen, die an den Linsenhalter (12) übertragen wird, und
der Linsenhalter (12) aus Metall ist, und das Heizelement (25, 29) eine Feder ist, die in elastischer Spannung zwischen dem Linsenhalter (12) und der Leiterplatte (26) angeordnet ist.

2. Optische Vorrichtung (10) nach Anspruch 1, **dadurch gekennzeichnet, dass** sie ein zweites Heizelement (27, 31) umfasst, das ähnlich wie das erste Heizelement (25, 29) gestaltet ist, wobei das zweite Heizelement (27, 31) so konfiguriert ist, dass es mit einer elektrischen Masse der Leiterplatte (26) verbunden ist.

3. Optische Vorrichtung (10) nach Anspruch 2, **dadurch gekennzeichnet, dass** sie ein zusätzliches elektrisches Verbindungselement (33, 35) zwischen dem ersten Heizelement (25, 29) und dem zweiten Heizelement (27, 31) umfasst, wobei das zusätzliche elektrische Verbindungselement (33, 35) am Linsenhalter (12) anliegt.

4. Optische Vorrichtung (10) nach einem beliebigen der vorstehenden Ansprüche,
**dadurch gekennzeichnet, dass** das Heizelement (25) eine Mehrspiral-Schraubenfeder ist, die unter Druck zwischen dem Linsenhalter (12) und der Leiterplatte (26) gestaltet ist.

5. Optische Vorrichtung (10) nach einem beliebigen der vorstehenden Ansprüche 1 bis 3, **dadurch gekennzeichnet, dass** der Linsenhalter (12) eine zylinderförmige an ihrem unteren Ende (24) offene Basis (22) aufweist, die sich entlang der optischen Achse (O) erstreckt, wobei die Leiterplatte (26) am unteren Ende (24) der Basis (22) gestaltet ist und so einen Hohlraum (90) im Inneren des Linsenhalters (12) bildet, und dass das Heizelement (29) eine Blattfeder ist, die mit elastischem Druck an der Innenfläche (61) der zylinderförmigen Wand (48) des Sockels (22) gestaltet ist.

6. Optische Vorrichtung (10) nach einem beliebigen der vorstehenden Ansprüche, **dadurch gekennzeichnet, dass** die Leiterplatte (26) eine Öffnung (62) in der Nähe des ersten Heizelements (25, 29) umfasst, wobei die Öffnung (62) dafür vorgesehen ist, eine Haltestange (63) des ersten Heizelements (25, 29) in unbelasteter Position bis zum Linsenhalter (12) einzuführen, wenn die elektronische Bilderfassungsschaltung (30) und die optische Linse (15) gemäß der optischen Achse (O) der Vorrichtung (10) ausgerichtet sind.

7. Verfahren zum Zusammenbau einer optischen Vorrichtung (10) nach einem beliebigen der vorstehenden Ansprüche, **dadurch gekennzeichnet, dass** es die folgenden Schritte umfasst:
Bereitstellung eines metallischen Linsenhalters (12) umfassend zumindest eine optische Linse (15);
Bereitstellung einer Leiterplatte (26) umfassend ein elektrisch leitendes Heizelement (25, 29) und eine elektronische Bilderfassungsschaltung (30);
Gestaltung des Linsenhalters (12) auf der Leiterplatte (26) mit elektronischer Bilderfassungsschaltung (30), damit die elektronische Bilderfassungsschaltung (30) und die optische Linse (15) entlang der optischen Achse (O) der Vorrichtung (10) ausgerichtet werden; und damit das Heizelement (25, 29) zwischen dem Linsenhalter (12) und der Leiterplatte (26) gestaltet wird und am Linsenhalter (12) anliegt.

8. Verfahren zum Zusammenbau nach Anspruch 7, **dadurch gekennzeichnet, dass** der Schritt mit Gestaltung des Linsenhalters (12) auf der Leiterplatte (26) die folgenden Schritte umfasst:
Halten des Heizelements (25, 29) in unbelasteter Position am Linsenhalter (12), wenn die elektronische Bilderfassungsschaltung (30) und die optische Linse (15) entlang der optischen Achse (O) der Vorrichtung (10) ausgerichtet sind, und
Gestalten des am Linsenhalter (12) anliegenden Heizelements (25, 29) nach dem Ausrichten der elektronischen Bildaufnahmeschaltung (30) und der optischen Linse (15) entlang der optischen Achse (O) der Vorrichtung (10).

9. Verfahren zum Erwärmen von Linsen der optischen Vorrichtung (10) nach einem beliebigen der vorstehenden Ansprüche 1 bis 6, **dadurch gekennzeichnet, dass** es die folgenden Schritte umfasst:
Umlauf eines elektrischen Stroms (66) im Heizelement (25, 29) der Leiterplatte (26), um Wärme (68) vom Heizelement (25, 29) zu erzeugen, das am Linsenhalter (12) aus Metall anliegt;
Übertragung der Wärme (68) vom Heizelement (25, 29) an den Linsenhalter (12);
Wärmeleitung (68) durch den Linsenhalter (12) aus Metall bis zu jeder optischen Linse (15) des Linsenhalters (12).

## Claims

1. An optical device (10) comprising:
a printed circuit board (26) comprising an electronic image capture circuit (30),
a lens holder (12) comprising at least one optical lens (15), the lens holder (12) being mounted on the printed circuit board (26) so as to align, along the optical axis (O) of the device (10), the electronic image capture circuit (30) and the optical lens (15); and
at least a first electrically conductive heating element (25, 29) arranged in electrical contact on the printed circuit board (26), between the lens holder (12) and the printed circuit board (26), and bearing against the lens holder (12), the first heating element (25, 29) being configured to be traversed by an electric current (66) coming from the printed circuit board (26), so as to generate heat (68) which is transmitted to the lens holder (12), and
the lens holder (12) being metallic and the heating element (25, 29) being a spring arranged in elastic stress between the lens holder (12) and the printed circuit board (26) .

2. The optical device (10) according to claim 1, **characterized in that** it comprises a second heating element (27, 31) arranged similarly to the first heating element (25, 29), the second heating element (27, 31) being configured to be connected to an electrical ground of the printed circuit board (26).

3. The optical device (10) according to claim 2, **characterized in that** it comprises an additional electrical connection element (33, 35) between the first heating element (25, 29) and the second heating element (27, 31), said additional electrical connection element (33, 35) being pressed against the lens holder (12).

4. The optical device (10) according to any one of the preceding claims, **characterized in that** the heating element (25) is a multi-turn helical spring arranged in compression between the lens holder (12) and the printed circuit board (26) .

5. The optical device (10) according to any one of claims 1 to 3, **characterized in that** the lens holder (12) includes a cylindrical base (22) open at its low end (24) extending along the optical axis (O), the printed circuit board (26) being arranged against the low end (24) of the base (22) thus forming a cavity (90) internal to the lens holder (12), and **in that** the heating element (29) is a leaf spring arranged to elastically bear against the inner face (61) of the cylindrical wall (48) of the base (22).

6. The optical device (10) according to any one of the preceding claims, **characterized in that** the printed circuit board (26) comprises an opening (62) in the vicinity of the first heating element (25, 29), said opening (62) being provided to insert therein a rod for holding (63) the first heating element (25, 29) in an unstressed position against the lens holder (12) during the alignment, along the optical axis (O) of the device (10), of the electronic image capture circuit (30) and of the optical lens (15).

7. A method for assembling an optical device (10) of any one of the preceding claims, **characterized in that** it comprises the steps of:
providing a metal lens holder (12) comprising at least one optical lens (15);
providing a printed circuit board (26) comprising an electrically conductive heating element (25, 29) and an electronic image capture circuit (30);
arranging the lens holder (12) on the image capture (30) electronic printed circuit board (26) so as to align, along the optical axis (O) of the device (10), the electronic image capture circuit (30) and the optical lens (15); and so as to arrange the heating element (25, 29) between the lens holder (12) and the printed circuit board (26), and bearing against the lens holder (12).

8. The assembly method according to claim 7, **characterized in that** the step of arranging the lens holder (12) on the printed circuit board (26) comprises the steps of:
holding the heating element (25, 29) in a position without elastic stress against the lens holder (12) during the alignment, along the optical axis (O) of the device (10), of the electronic image capture circuit (30) and the optical lens (15), and
arranging the heating element (25, 29) bearing against the lens holder (12) after the alignment, along the optical axis (O) of the device (10), of the electronic image capture circuit (30) and of the optical lens (15).

9. A method for heating lenses of the optical device (10) of any one of claims 1 to 6, **characterized in that** it includes the steps of:
circulating an electric current (66) in the heating element (25, 29) of the printed circuit board (26) so as to generate heat (68) from the heating element (25, 29) bearing against the metal lens holder (12);
transmitting heat (68) from the heating element (25, 29) to the lens holder (12);
conducting heat (68) through the metal lens holder (12) up to each optical lens (15) of the lens holder (12).
